Europäisches Patentamt

European Patent Office

Office européen des brevets

(19)

(11) Publication number: **0 148 103**
**A2**

(12) # EUROPEAN PATENT APPLICATION

(21) Application number: 84630202.4

(22) Date of filing: **20.12.84**

(51) Int. Cl.⁴: **B 65 D 1/02**

(30) Priority: **23.12.83 US 564798**

(43) Date of publication of application:
**10.07.85 Bulletin 85/28**

(84) Designated Contracting States:
**BE DE FR GB IT**

(71) Applicant: **THE GOODYEAR TIRE & RUBBER COMPANY**
**1144 East Market Street**
**Akron, Ohio 44316(US)**

(72) Inventor: **Shriver, Clem Branum**
**40 Comet Road**
**Clinton, Ohio 44216(US)**

(74) Representative: **Stanley, Michael Gordon**
**GOODYEAR INTERNATIONAL TIRE TECHNICAL CENTER**
**PATENT DEPARTMENT Avenue Gordon Smith**
**L-7750 Colmar-Berg(LU)**

(54) A biaxially oriented polyester container.

(57) A fabric reinforced biaxially oriented polyester container including a seamless body portion of biaxially oriented polyester enclosed in a stretched fabric envelope (5), said body portion having at least one access opening and means to close said openings and method of producing said container.

FIG. 2

Croydon Printing Company Ltd

1

## A BIAXIALLY ORIENTED POLYESTER CONTAINER

### Technical Field

This invention relates to a fabric reinforced biaxially oriented polyester container composed of a seamless body portion of biaxially oriented polyester expanded to stretch the fabric enveloping the body portion and to the method of making said containers.

More particularly this invention relates to a fabric reinforced biaxially oriented polyester container for handling fuel or other materials especially where the container experiences high impact.

### Background

Fabric reinforced elastomeric containers are well known and used extensively for fuel tanks for aircraft and motor vehicles and to haul water or powdery materials. These containers are fabricated by plying up elastomeric fabric which results in containers having seams. Although the spray produced polyurethane containers has eliminated seams in the elastomer the fabric still has seams and is not stretched to give the container enhanced burst strength.

### Disclosure and Practice of the Invention

This invention provides a fabric reinforced biaxially oriented polyester container having enhanced burst resistance.

This container includes preferably a seamless body portion of biaxially oriented polyester enclosed in a stretched fabric preferably a double knit polyester or polyamide fabric envelope and having at least one access opening and means to close said opening. These containers are produced by forming preforms shaped like a parison preferably of polyester, placing a stretchable sleeve over the preform, blowing the preform in a mold to biaxially orientate the material of the preform viz polyester and to move the stretched material against the surface of said mold to stretch the fabric over the body portion, removing from the mold, then a cap or hose may be placed on the head of the blown preform to give a closed container or to connect it to other apparatus.

Normally fuel containers are shaped to fit in certain spaces on the vehicle and are not essentially cylindrical in shape, but are rectangular in shape. This desire for rectangular shape does not prevent this invention from being used, but only affects the shape of the mold used during the blow molding step. Also the shape of the container affects the degree of stretch of both the polyester and the fabric in certain dimensions. It should be appreciated that even in cylindrical shaped blown containers the hoop dimension usually has been stretched three to five times while the axial dimension has been stretched two to three times, depending on dimensions of the mold.

The nature of this invention and its advantages can be appreciated more readily by reference to the drawings wherein

Fig. 1 is a vertical perspective view of a preform, also sometimes called generically a parison;

Fig. 2 shows a perspective view of a cylindrical container;

Fig. 3 shows a preform having a sleeve therein positioned in an open mold.

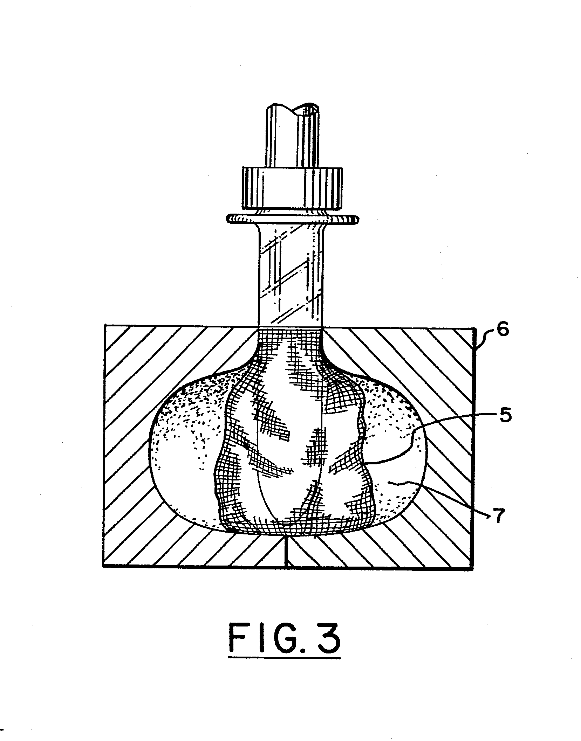

The numberal 4 designates a polyester preform shaped like a parison over which the fabric reinforcing sleeve 5 is slipped. The fabric sleeve 5 of a suitable fabric is positioned over the preform 4 and placed in mold 6 to await the closing of the mold 6 shown in Fig. 3.

It should be appreciated that the mold cavity 6 can be any shape, but normally will be essentially rectangular in shape for most vehicles or the shape to accommodate fuel tank cavity of the vehicle.

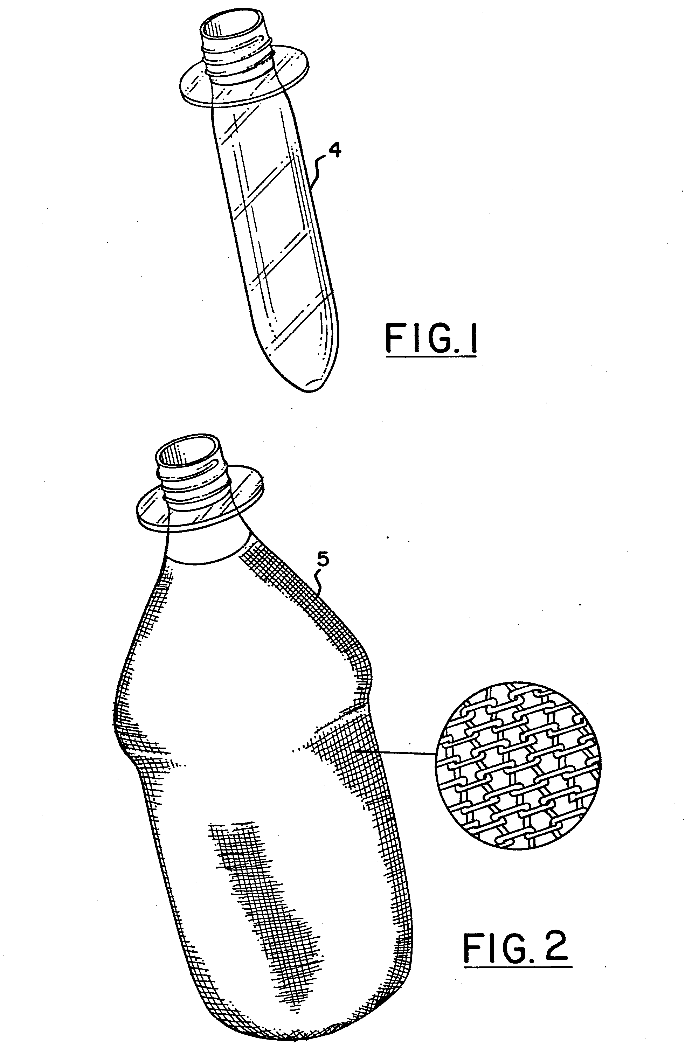

The preform and fabric preferably at the blown or stretch temperature usually is placed in the mold of Fig. 3 and closed. The parison is blown to expand the preform to move the fabric into contour with walls of the mold cavity and simultaneously therewith stretch it. It should be appreciated that the blow temperature is a function of blow or softening temperature of fabric and preform material. This blowing of the preform expands and stretches the sleeve to fit tightly over the exterior surface of the blow molded container as seen best in Fig. 2, after it is removed from the mold of Fig. 3.

It is preferred to keep pressure on the container until it is cooled. It should be appreciated that the special grooves on the head of the parison can be used to attach a closure means, a screw cap and a hose for fitting and emptying the container.

The container of Fig. 2 in a preferred embodiment is given a coating of a polyester or polyurethane or other polymer to cover the fabric and protect the fabric from wear.

Preforms were blown on a reheat-blow molding equipment, such as Cincinnati Milacron RHB-L or RHB-V equipment using a polyester available under the tradename PET viz a polyethylene glycol terephthalate polyester which can be stretched at 85-100°C. to give a film that is biaxial orientation. Other polyesters of the lower glycols and ether glycols with the dicarboxylic acids and anhydrides that can be formed into blown films and stretched biaxially can be used. Especially desirable are the 2 to 4 carbon atom glycol phthalate polyester.

The heated preform is moved to the blow position in the mold, preferably already fitted with a fabric sleeve of the appropriate size and shape to stretch to fit over the blown container. The fabric preferably is of a double knit weave, but in general any of the woven fabrics may be used. The fabrics formed from polyester, polyamides and polypropylenes are desired although others may be used. The preferred polyesters have an intrinsic viscosity at 30°C. of 0.75 to 1.04.

The blow temperature is controlled by the temperature of the mold and the temperature needed depends on the softening temperature of the material of which the parison is made. For the PET polyesters this is about 85 to 100°C.

With the mold closed and the preform at the blow temperature, the preform is blown to stretch the preform to cause it to expand and move the sleeve into a tight fit over the outside surface of the preform when it contacts the surface of the mold. This blowing of the preform stretches the sleeve and it will exhibit a tendency to buckle the blown preform if the pressure of the blowing gas is removed too quickly. Therefore, some pressure preferably is left on the preform as the mold is opened and the blown container is removed from the open mold. Likewise, as is well known to blow molders, the temperature of the mold can be adjusted to facilitate the blowing and demolding.

The container preferably is coated with a polyester or a polyurethane to protect the fabric. The polyester or polyurethane can be applied as a solvent solution by spraying or dipping. Particularly suitable are the well known solutions of polyurethane used to make sprayed polyurethane fuel tanks as they exhibit fuel resistance and adhere readily to the blown containers of this invention.

For example, a container made as described above of 64 oz. polyester exhibited greater resistance to tear under pendulum impact test.

While certain representative embodiments and details have been shown for the purpose of illustrating the invention it will be apparent to those skilled in this art that various changes and modifications may be made therein without departing from the spirit or scope of the invention.

## CLAIMS

1.  A fabric reinforced biaxially oriented polyester container including a seamless body portion of biaxially oriented polyester enclosed in a stretched fabric envelope, said body portion having at least one access opening and means to close each opening or attach to other apparatus.

2.  The container of Claim 1 wherein the fabric is double kit.

3.  A method of producing a biaxially oriented polyester container comprising forming a polyester preform, placing a stretchable fabric sleeve over the preform, blowing the preform in a mold to biaxially orientate the polyester and to move the polyester against the surface of said mold to stretch the fabric.

4.  The method of Claim 3 wherein the fabric is double knit.

5.  The container of Claim 1 wherein the polyester has an intrinsic viscosity of about 0.72 to 1.04.

6.  The container of Claim 2 wherein the polyester is a polyethylene terephthalate.

7.  The container of Claim 6 wherein the polyester is a polyethylene terephthalate.

FIG.1

FIG. 2

FIG. 3